# EUROPEAN PATENT SPECIFICATION

(11) **EP 2 521 655 B1**
(45) Date of publication and mention of the grant of the patent: **09.04.2014**
(21) Application number: 10807408.9
(22) Date of filing: 30.12.2010
(51) Int. Cl.: B60B 31/02

(54) **AUTOMATED TENSIONING MACHINE FOR SPOKE WHEELS**
AUTOMATISCHE ZENTRIERMASCHINE FÜR SPEICHENRÄDER
MACHINE AUTOMATIQUE POUR CENTRER LES ROUES A RAYONS

(30) Priority: 05.01.2010 NL 2004061
(43) Date of publication of application: 14.11.2012
(73) Proprietor: Holland Mechanics BV, 1442 PZ Purmerend (NL)
(72) Inventor: WESSELS, Jasper Johannes, NL-1135 VG Edam (NL)
(74) Representative: Klavers, Cornelis
(86) International application number: PCT/NL2010/050896
(87) International publication number: WO 2011/084052

(56) References cited:
- WO-A1-00/16996
- GB-A- 856 691
- JP-A- 61 006 003
- US-A- 2 533 113

## Description

The present invention relates to a tensioning machine which is used for tensioning the spokes of a spoke wheel.

The present invention further relates to a method for the corresponding tensioning of spokes in spoke wheels.

In the tightening or tensioning machines that are known so far, tensioning of a separate laced - at low tension, spoke wheel whose spokes are to be tensioned yet, takes place. Using specially formed heavy clamping constructions comprising shell members that bed down on the rim, the rim and the wheel hub are firmly and immovably clamped down. The spokes are tensioned by tightening nipples provided on the spokes on the inner side or the outer side of the rim, whilst the position of the rim remains unchanged on account of the clamped position of the rim. The nipples form rotatable rim moving elements, which are tightened with a predetermined torque in the known machines. The idea is that said predetermined torque leads to a corresponding individual spoke tension and that the virtual absence of any lateral and/or vertical alignment deviation in the rim will be retained also after the clamping shell members are removed.

A drawback of those machines is the fact that different, dedicated shell members, which must be manufactured with a high degree of precision, are needed for every differently formed type of spoke wheel exhibiting different rim widths, spoke positions, rim shapes and diameters so as to be able to clamp down those rim types as well.

GB-856,691 A discloses the pre-characterising features of claims 1 and 8 respectively. In particular drivable spoke tensioning means in the form of nipple rotating means are disclosed. The nipple rotating means are stopped upon reaching a predetermined tension in at least some of the spokes. Torque related actions are taken by these means in order to achieve flatness of the wheel. When taken on several spokes the nipple rotating torque is stated to be a fairly close indication of the general tension level of the spokes on the wheel.

The object of the invention is to provide an improved, simpler and less heavy tensioning machine and a corresponding method which are more universal and which require fewer machine adaptations in use and which furthermore provide more precisely aligned spoke wheels which, in the long run, will exhibit less lateral and/or vertical alignment deviations.

In order to accomplish that object, the tensioning machine and the tensioning method according to the invention exhibit the features summed up in independent claims 1 and 8.

The advantages of the tensioning machine and the tensioning method according to the invention include the fact that the rim of the spoke wheel to be tensioned no longer needs to be clamped down. Thus, the shell members required for doing so are no longer needed and it is no longer necessary to produce dedicated shell members for the rim type in question. Furthermore, converting the machine and exchanging shell members for shell members suitable for other types of spoke wheels, which was previously required, is no longer necessary, either, so that the machine can be more quickly adapted to the multitude of available rim sizes, spoke patterns and rim types.

Another embodiment of the tensioning machine is characterised in that the control system is arranged for measuring any lateral and/or vertical alignment deviations at a number of rim positions angularly symmetrically disposed around the wheel hub.

This leads to a gain in time in combination with the quick realisation of a desired uniform mechanical tension distribution at the desired tension level.

Further detailed possible embodiments as defined in the other dependent claims and their concomitant advantages will be set forth in the description below.

The tensioning machine and the related method according to the present invention will now be explained in more detail with reference to the following figures, in which like parts are indicated by the same numerals. In the drawing:
Figure 1 is a front view of a tensioning machine according to the invention;
Figure 2 is a detail view of the tensioning machine of figure 1; and
Figure 3 shows a part of a spoke wheel comprising spokes to be tensioned in the tensioning machine shown in figures 1 and 2.

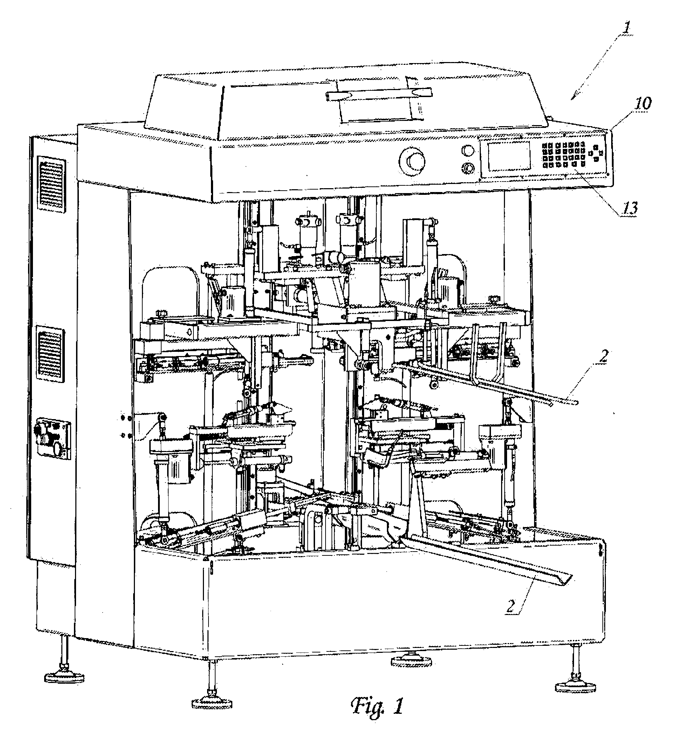

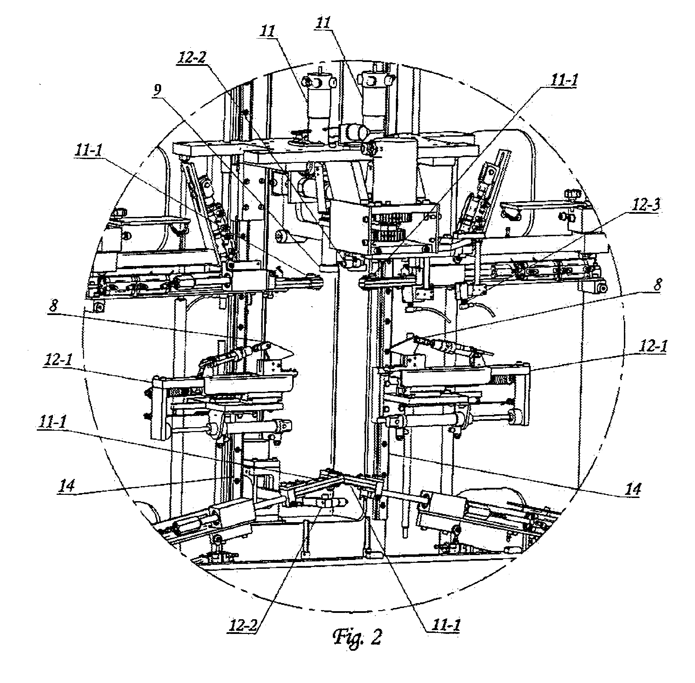

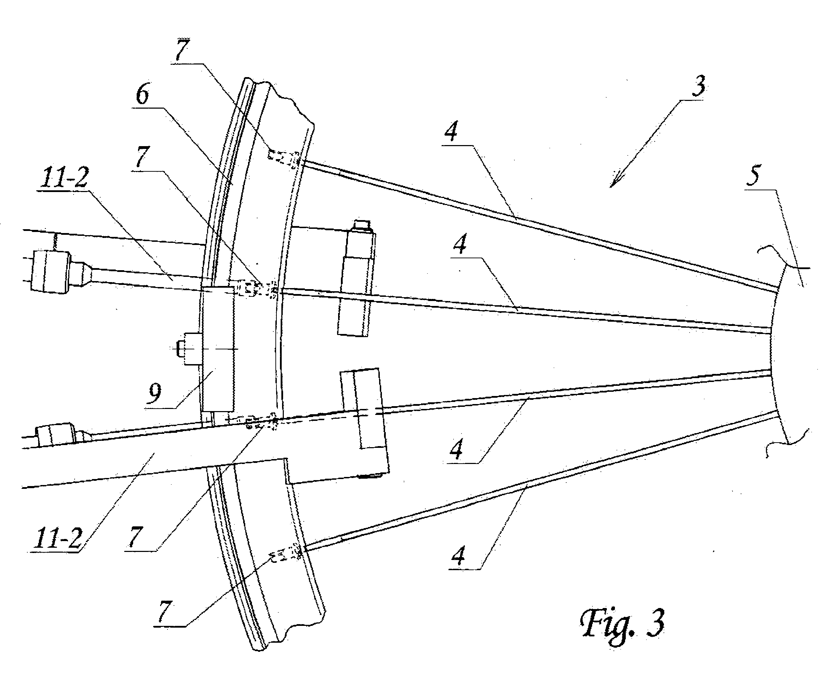

Figures 1 and 2 schematically show the practical structure of a tensioning machine 1 and a detail thereof. The tensioning machine 1 comprises means 2 via which a spoke wheel 3 (partially shown in figure 3) can be placed in the tensioning machine and be discharged therefrom after the spokes 4, which are usually provided in non-tensioned condition in the spoke wheel 3, have been tensioned. The spokes 4, which extend between the wheel hub 5 and the rim 6, are provided with rotatable rim moving elements 7 on the side of the rim 6. In practice said elements are configured as nipples 7 mounted on a spoke end, which can be rotated from the inner side and/or from the outer side of the rim 6 so as to tension the spoke 4 to a desired mechanical tension by moving the rim 6.

The tensioning machine 1 further comprises fixing means 8, by means of which the wheel hub 5 can be fixed in position in the machine 1 after the spoke wheel 3 has been placed in the tensioning machine 1 via the means 2. The tensioning machine further comprises driving means 9 connected to the spoke wheel 3, usually configured as rotatable drive rollers to be pressed against the wheel 3, by means of which the spoke wheel 3 can be rotated as desired after being fixed in position.

The tensioning machine 1 further comprises a microcomputer software controlled control system 10, for influencing the various means and elements already explained and yet to be explained, and in particular the order in which the various operations in the tensioning machine 1 are carried out. Connected to the control system 10 are, among other things: drivable spoke tensioning means, generally indicated by reference numeral 11, for example comprising rotatable nipple wrenches 11-1, which engage around the nipples 7 and spokes 4, or screwdrivers 11-2 which fit the nipples 7 on the ends of the spokes 4 - which nipples can generally be connected to the rim moving elements 7 - as well as measuring sensors 12-1, 12-2, for example optic sensors, which are arranged to measure any lateral and/or vertical alignment deviations of the spoke wheel 3, at least at the location of the rim. Furthermore, sensors 12-3 are provided for determining the position of the spokes 4 relative to the tensioning means 11.

The control system 10 is designed to correct the spoke tension in the spoke wheel by controlled rotation of the spoke tensioning means 11 independently of the torque being applied. In other words, the extent to which said means 11 are rotated is the measure for moving the rim 6 and tensioning the spokes 4 of the spoke wheel 3. This provides a direct relation between the extent of rotation and the associated movement of the means 11, and thus of the rim 6, of course after the nipple wrenches 11-1 and/or the screwdrivers 11-2 have first made a free turn. The consequence is that when all the spokes 4 have been tensioned to the correct tension by the spoke tensioning means 11, any lateral and/or vertical alignment deviations of the spoke wheel 3 will have been minimized.

The control system 10 is preferably designed to measure the lateral and/or vertical alignment deviation at a number of rim positions, which may be angularly symmetrically disposed around the wheel hub 5, although this is not necessary, at which positions the spokes 4 are tensioned to the desired tension by tightening the nipples 7. Said rim positions, at which the spoke tensioning means 11 are disposed in that case, are arranged diametrically opposite each other, for example at an angle of 180 degrees, as shown in figures 1 and 2, at an angle of 120 degrees relative to each other or in a quadrant, viz. at an angle of 90 degrees relative to each other. According to a particular strategy, the rim moving elements 7 are rotated in a desired pattern, driven by the driving means 9, until a spoke wheel 3 is obtained whose spokes 4 all have the desired tension, with the wheel 3 exhibiting a minimal alignment deviation. A desired strategy for measuring and/or tensioning the spokes 4 in a desired order, which strategy is optimal with a view to achieving the desired final result, may be followed with every type of spoke wheel 3 or rim 6, making use of the aforesaid correction realised by rotating the elements or nipples 7.

According to another possible strategy, the control system 10 is for example programmed to measure the lateral and/or vertical alignment deviation at one or more rim positions and carry out the measurements anew after corrections have been made, and to use the latest measuring results for further corrections of the lateral and/or vertical alignment deviation, possibly at one or more other rim positions. Usually, the tensioning machine 1 is designed for determining the movement of the rim 6 of the spoke wheel 3 on the basis of a number of - possibly partial - revolutions of the spoke tensioning means 11 or the rim moving elements 7 during tensioning and/or on the basis of the movement of the spoke moving means 7 relative to the spoke 4. In the latter case, it is in fact the effective length of the spoke 4 between the wheel hub 5 and the inner side of the rim 6 that is measured.

In a further embodiment, the tensioning machine 1 comprises registration means 13 for recording the lateral alignment deviation and/or the vertical alignment deviation for each rim position, such as the rim position where the spokes engage, in a memory, usually a memory of the control system 10. In particular the changes in the various alignment deviations in the wheel 3 during tensioning can be constantly measured and stored, possibly following a predetermined strategy.

The aforesaid controlled rotation of the means 7 and/or the spoke tensioning means 7 takes place in dependence on the - possibly automatic - recognition of the type of spoke wheel 3, which can for example be carried out by means of a number of probes or sensors (not shown) which are known per se. Adaptation to the type of wheel 3 and positioning of the aforesaid means 7 and 11, which may be carried out in an automated or non-automated process, takes place along guides 14.

The controlled rotation of the means 7 and/or the spoke tensioning means 11 for realising the desired spoke tension may take place in dependence on the results of current measurements of the lateral and/or vertical alignment deviation.

## Claims

1. A tensioning machine (1) comprising:
- means (2) by which a spoke wheel (3) provided with spokes (4) to be tensioned between the wheel hub (5) and the rim (6) thereof, which spokes (4) are provided with rotatable rim moving elements (7), is placed in the tensioning machine (1);
- fixing means (8) by which the position of the wheel hub (5) is fixed after the spoke wheel (3) has been placed in the tensioning machine (1);
- driving means (9) connected to the spoke wheel (3) for rotating the spoke wheel;
- a control system (10) for the tensioning machine (1);
- drivable spoke tensioning means (11) connected to the control system (10), which spoke tensioning means (11) can be connected to the rim moving elements (7);
- measuring sensors (12) connected to the control system (10), which measuring sensors (12) are arranged for measuring any lateral and/or vertical deviation of the spoke wheel (3) at least at the location of the rim (6); wherein said control system (10) is arranged for correcting the spoke tension in the spoke wheel (3),
**characterised in that** the control system (10) is arranged for correcting the spoke tension in the spoke wheel (3) on the basis of controlled non-torque dependent rotation of the rim moving elements (7) and/or the spoke tensioning means (11), and that the tensioning machine (1) is designed for determining the movement of the rim (6) of the spoke wheel (3) on the basis of a number of - possibly partial - revolutions of the spoke tensioning means (11) and/or the rim moving elements (7) during tensioning and/or on the basis of the movement of the rim moving elements (7) relative to the spoke (4).

2. A tensioning machine (1) according to claim 1, **characterised in that** the control system (10) is arranged for measuring any lateral and/or vertical alignment deviations at a number of rim (6) positions angularly symmetrically disposed around the wheel hub (5) for additionally correcting the spoke (4) tension on the basis thereof.

3. A tensioning machine according (1) to claim 1 or 2, **characterised in that** the spoke tensioning means (11) are arranged diametrically opposite each other, viz. at an angle of 180 degrees, at an angle of 120 degrees relative to each other or in a quadrant, viz. at an angle of 90 degrees relative to each other.

4. A tensioning machine (1) according to any one of claims 1-3, **characterised in that** the control system (10) is designed to measure the lateral and/or vertical alignment deviation at one or more rim (6) positions and carry out the measurements anew after corrections have been made, using the latest measuring results for further corrections of the lateral and/or vertical alignment deviation, possibly at one or more other rim (6) positions.

5. A tensioning machine (1) according to any one of the claims 1-4, **characterised in that** the control system (10) has measuring sensors (12-1, 12-2) connected thereto in the form of optic sensors, which are arranged to measure any lateral and/or vertical alignment deviations of the spoke wheel (3), at least at the location of the rim.

6. A tensioning machine (1) according to any one of claims 1-5, **characterised in that** the tensioning machine (1) comprises registration means (13) for recording the lateral alignment deviation and/or the vertical alignment deviation for each rim (6) position, such as the rim position where the spokes (4) engage, in a memory.

7. A tensioning machine (1) according to any one of claims 1-6, **characterised in that** the means for placing the spoke wheel (3) in the tensioning machine (1) are designed to place, and possibly also discharge, the spoke wheel (3) in an upright orientation.

8. A method wherein spokes (4) in a spoke wheel (3) provided with a rim (6) are tensioned by a tensioning machine (1) according to any one of the preceding claims by means of rim moving elements (7) and/or spoke tensioning means (11), in a manner in which movement of the freely movable rim (6) of the spoke wheel (3) is effected by controlled rotation of the aforesaid elements (7) and/or means (11), **characterised in that** the movement of the rim (6) of the spoke wheel (3) is determined on the basis of a number of non-torque dependent - possibly partial - revolutions of the spoke tensioning means (11) and/or the rim moving elements (7) during tensioning and/or on the basis of the movement of the rim moving elements (7) relative to the spoke (4).

9. A method according to claim 8, **characterised in that** the lateral and/or vertical alignment deviation at one or more rim (6) positions is measured and that said measurements are carried out anew after corrections have been made, using the latest measuring results for further corrections of the lateral and/or vertical alignment deviation, possibly at one or more other rim (6) positions.

10. A method according to claim 8 or 9, **characterised in that** said controlled rotation takes place in dependence on the, possibly automatic, recognition of the type of spoke wheel (3).

11. A method according to any one of claims 8-10, **characterised in that** measurement of the lateral and/or vertical alignment deviation takes place, possibly continuously, while the spoke wheel (3) is being tensioned.

12. A method according to any one of claims 8-11, **characterised in that** said controlled rotation takes place in dependence on the results of current measurements of the lateral and/or vertical alignment deviation.

## Patentansprüche

1. Spannvorrichtung (1), umfassend:
- Mittel (2) wodurch ein Speichenrad (3), das mit Speichen (4) versehen ist, die zwischen der Radnabe (5) und seiner Felge (6) gespannt werden sollen, welche Speichen (4) mit drehbaren Felgenbewegungselementen (7) versehen sind, in der Spannvorrichtung (1) angeordnet wird;
- Fixiermittel (8), wodurch die Position der Radnabe (5) fixiert wird, nachdem das Speichenrad (3) in der Spannmaschine (1) angeordnet wurde;
- ein Antriebsmittel (9), das mit dem Speichenrad (3) verbunden ist, um das Speichenrad zu drehen;
- ein Steuersystem (10) für die Spannvorrichtung (1);
- antreibbare Speichenspannmittel (11), die an das Steuersystem (10) angeschlossen sind, wobei die Speichenspannmittel (11) mit den Felgenbewegungselementen (7) verbunden sind;
- Messsensoren (12), die an das Steuersystem (10) angeschlossen sind, wobei die Messsensoren (12) dazu eingerichtet sind, jegliche seitliche und/oder senkrechte Abweichung des Speichenrads (3) wenigstens an der Stelle der Felge (6) zu messen;
wobei das Steuersystem (10) dazu eingerichtet ist, die Speichenspannung in dem Speichenrad (3) zu korrigieren,
**dadurch gekennzeichnet, dass** das Steuersystem (10) dazu eingerichtet ist, die Speichenspannung in dem Speichenrad (3) auf Basis einer gesteuerten, nicht drehmomentabhängigen Drehung der Felgenbewegungselemente (7) und/oder Speichenspannmittel (11) zu korrigieren, und dass die Spannvorrichtung (1) dazu gestaltet ist, die Bewegung der Felge (6) des Speichenrads (3) auf Basis einer Anzahl von - möglicherweise teilweisen - Umdrehungen der Speichenspannmittel (11) und/oder der Felgenbewegungselemente (7) während des Spannens und/oder auf Basis der Bewegung der Felgenbewegungselemente (7) in Bezug auf die Speiche (4) zu bestimmen.

2. Spannvorrichtung (1) nach Anspruch 1, **dadurch gekennzeichnet, dass** das Steuersystem (10) dazu eingerichtet ist, jegliche seitliche und/oder senkrechte Ausrichtungsabweichung an einer Anzahl von Positionen der Felge (6), die winkelig symmetrisch um die Radnabe (5) herum angeordnet sind, zu messen, um die Spannung der Speiche (4) zusätzlich darauf basierend zu korrigieren.

3. Spannvorrichtung (1) nach Anspruch 1 oder 2, **dadurch gekennzeichnet, dass** die Speichenspannmittel (11) einander diametral gegenüberliegend, nämlich in einem Winkel von 180 Grad, in einem Winkel von 120 Grad in Bezug zueinander, oder in einem Viertelkreis, nämlich in einem Winkel von 90 Grad in Bezug zueinander, angeordnet sind.

4. Spannvorrichtung (1) nach einem der Ansprüche 1 bis 3, **dadurch gekennzeichnet, dass** das Steuersystem (10) dazu gestaltet ist, die seitliche und/oder senkrechte Ausrichtungsabweichung an einer oder mehreren Positionen der Felge (6) zu messen und die Messungen nach Vornahme von Korrekturen erneut durchzuführen, wobei die jüngsten Messergebnisse für weitere Korrekturen der seitlichen und/oder senkrechten Ausrichtungsabweichung - möglicherweise an einer oder mehreren anderen Positionen der Felge (6) - verwendet werden.

5. Spannvorrichtung (1) nach einem der Ansprüche 1 bis 4, **dadurch gekennzeichnet, dass** das Steuersystem (10) daran angeschlossene Messsensoren (12-1, 12-2) in der Form von optischen Sensoren aufweist, die dazu eingerichtet sind, jedwede seitlichen und/oder senkrechten Ausrichtungsabweichungen des Speichenrads (3) wenigstens an der Stelle der Felge zu messen.

6. Spannvorrichtung (1) nach einem der Ansprüche 1 bis 5, **dadurch gekennzeichnet, dass** die Spannvorrichtung (1) ein Eintragemittel (13) zur Aufzeichnung der seitlichen Ausrichtungsabweichung und/oder der senkrechten Ausrichtungsabweichung für jede Position der Felge (6), wie etwa die Felgenposition, an der die Speichen (4) eingreifen, in einem Speicher umfasst.

7. Spannvorrichtung (1) nach einem der Ansprüche 1 bis 6, **dadurch gekennzeichnet, dass** die Mittel zur Anordnung des Speichenrads (3) in der Spannvorrichtung (1) dazu gestaltet sind, das Speichenrad (3) in einer aufrechten Ausrichtung anzuordnen und möglicherweise auch abzugeben.

8. Verfahren, wobei Speichen (4) in einem Speichenrad (3), das mit einer Felge (6) versehen ist, durch eine Spannvorrichtung (1) nach einem der vorhergehenden Ansprüche mittels Felgenbewegungselementen (7) und/oder Speichenspannmitteln (11) auf eine Weise gespannt werden, bei der durch eine gesteuerte Drehung der oben genannten Elemente (7) und/oder Mittel (11) eine Bewegung der frei beweglichen Felge (6) des Speichenrads (3) bewerkstelligt wird, **dadurch gekennzeichnet, dass** die Bewegung der Felge (6) des Speichenrads (3) auf Basis einer Anzahl von nicht drehmomentabhängigen - möglicherweise teilweisen-Drehungen der Speichenspannmittel (11) und/oder der Felgenbewegungselemente (7) während des Spannens und/oder auf Basis der Bewegung der Felgenbewegungselemente (7) in Bezug auf die Speiche (4) bestimmt wird.

9. Verfahren nach Anspruch 8, **dadurch gekennzeichnet, dass** die seitliche und/oder senkrechte Ausrichtungsabweichung an einer oder mehreren Positionen der Felge (6) gemessen wird und die Messungen nach Vornahme von Korrekturen erneut durchgeführt werden, wobei die jüngsten Messergebnisse für weitere Korrekturen der seitlichen und/oder senkrechten Ausrichtungsabweichung - möglicherweise an einer oder mehreren anderen Positionen der Felge (6)-verwendet werden.

10. Verfahren nach Anspruch 8 oder 9, **dadurch gekennzeichnet, dass** die gesteuerte Drehung in Abhängigkeit von der - möglicherweise automatischen - Erkennung der Art des Speichenrads (3) stattfindet.

11. Verfahren nach einem der Ansprüche 8 bis 10, **dadurch gekennzeichnet, dass** die Messung der seitlichen und/oder senkrechten Ausrichtungsabweichung stattfindet - möglicherweise fortlaufend - während das Speichenrad (3) gespannt wird.

12. Verfahren nach einem der Ansprüche 8 bis 11, **dadurch gekennzeichnet, dass** die gesteuerte Drehung in Abhängigkeit von den Ergebnissen der gegenwärtigen Messungen der seitlichen und/oder senkrechten Ausrichtungsabweichung stattfindet.

## Revendications

1. Machine de tensionnement (1) comprenant :
- un moyen (2), par lequel une roue à rayons (3) dotée de rayons (4) à tendre entre le moyeu de la roue (5) et le bord (6) de celle-ci, lesquels rayons (4) sont dotés d'éléments de déplacement du bord rotatifs (7), est placée dans la machine de tensionnement (1) ;
- un moyen de fixation (8) par lequel la position du moyeu de la roue (5) est fixée après que la roue à rayons (3) a été placée dans la machine de tensionnement (1) ;
- un moyen d'entraînement (9) relié à la roue à rayons (3) pour faire tourner la roue à rayons ;
- un système de commande (10) pour la machine de tensionnement (1) ;
- des moyens de tensionnement de rayon entraînables (11) reliés au système de commande (10), lesquels moyens de tensionnement de rayon (11) peuvent être reliés aux éléments de déplacement du bord (7) ;
- des capteurs de mesure (12) reliés au système de commande (10), lesquels capteurs de mesure (12) sont agencés pour mesurer tout écart latéral et/ou vertical de la roue à rayons (3) au moins à l'emplacement du bord (6); sachant que le système de commande (10) est agencé pour corriger la tension de rayon dans la roue à rayons (3),
**caractérisé en ce que** le système de commande (10) est agencé pour corriger la tension de rayon dans la roue à rayons (3) en se basant sur la rotation indépendante du couple contrôlée des éléments de déplacement du bord (7) et/ou des moyens de tensionnement de rayon (11), et **en ce que** la machine de tensionnement (1) est conçue pour déterminer le mouvement du bord (6) de la roue à rayons (3) en se basant sur un nombre de révolutions, éventuellement partielles, des moyens de tensionnement de rayon (11) et/ou des éléments de déplacement du bord (7) pendant le tensionnement et/ou en se basant sur le mouvement des éléments de déplacement du bord (7) par rapport au rayon (4).

2. Machine de tensionnement (1) selon la revendication 1, **caractérisée en ce que** le système de commande (10) est agencé pour mesurer tout écart d'alignement latéral et/ou vertical sur un nombre de positions du bord (6) disposées en symétrie d'angle autour du moyeu de la roue (5) pour corriger de façon supplémentaire la tension de rayon (4) en se basant dessus.

3. Machine de tensionnement (1) selon la revendication 1 ou 2, **caractérisée en ce que** les moyens de tensionnement de rayon (11) sont agencés de façon diamétralement opposée l'un à l'autre, à savoir à un angle de 180 degrés, à un angle de 120 degrés l'un par rapport à l'autre ou dans un quadrant, à savoir à un angle de 90 degrés l'un par rapport à l'autre.

4. Machine de tensionnement (1) selon l'une quelconque des revendications 1 à 3, **caractérisée en ce que** le système de commande (10) est conçu pour mesurer l'écart d'alignement latéral et/ou vertical sur une ou plusieurs positions du bord (6) et effectuer les mesures à nouveau après que des corrections ont été apportées, en utilisant les résultats de mesure les plus récents pour des corrections ultérieures de l'écart d'alignement latéral et/ou vertical, éventuellement sur une ou plusieurs positions du bord (6).

5. Machine de tensionnement (1) selon l'une quelconque des revendications 1 à 4, **caractérisée en ce que** le système de commande (10) présente des capteurs de mesure (12-1, 12-2) reliés à celui-ci ayant la forme de capteurs optiques qui sont agencés pour mesurer tout écart d'alignement latéral et/ou vertical de la roue à rayons (3), au moins à l'emplacement du bord.

6. Machine de tensionnement (1) selon l'une quelconque des revendications 1 à 5, **caractérisée en ce que** la machine de tensionnement (1) comprend un moyen d'enregistrement (13) pour enregistrer dans une mémoire l'écart d'alignement latéral et/ou l'écart d'alignement vertical pour chaque position du bord (6), telle que la position du bord là où les rayons (4) s'engagent.

7. Machine de tensionnement (1) selon l'une quelconque des revendications 1 à 6, **caractérisée en ce que** le moyen pour placer la roue à rayons (3) dans la machine de tensionnement (1) est conçu pour placer et éventuellement décharger la roue à rayons (3) dans une orientation verticale.

8. Procédé dans lequel des rayons (4) dans une roue à rayons (3) dotée d'un bord (6) sont tendus par une machine de tensionnement (1) selon l'une quelconque des revendications précédentes au moyen d'éléments de déplacement du bord (7) et/ou de moyens de tensionnement de rayon (11), d'une manière dans laquelle le mouvement du bord (6) pouvant être déplacé librement de la roue à rayons (3) est effectué par la rotation contrôlée des éléments (7) et/ou des moyens (11) mentionnés ci-dessus, **caractérisé en ce que** le mouvement du bord (6) de la roue à rayons (3) est déterminé en se basant sur un nombre de révolutions indépendantes du couple, éventuellement partielles, des moyens de tensionnement de rayon (11) et/ou des éléments de déplacement du bord (7) pendant le tensionnement et/ou en se basant sur le mouvement des éléments de déplacement du bord (7) par rapport au rayon (4).

9. Procédé selon la revendication 8, **caractérisé en ce que** l'écart d'alignement latéral et/ou vertical sur l'une ou plusieurs positions du bord (6) est mesuré et que les mesures sont effectuées à nouveau après que des corrections ont été apportées, en utilisant les résultats de mesure les plus récents pour des corrections ultérieures de l'écart d'alignement latéral et/ou vertical, éventuellement sur une ou plusieurs positions du bord (6).

10. Procédé selon la revendication 8 ou 9, **caractérisé en ce que** la rotation contrôlée a lieu en fonction de la reconnaissance, éventuellement automatique, du type de roue à rayons (3).

11. Procédé selon l'une quelconque des revendications 8 à 10, **caractérisé en ce que** la mesure de l'écart d'alignement latéral et/ou vertical a lieu, éventuellement de façon continue, pendant que la roue à rayons (3) est mise sous tension.

12. Procédé selon l'une quelconque des revendications 8 à 11, **caractérisé en ce que** la rotation contrôlée a lieu en fonction des résultats des mesures en cours de l'écart d'alignement latéral et/ou vertical.
